# EUROPÄISCHE PATENTSCHRIFT

(11) **EP 2 541 455 B1**
(45) Veröffentlichungstag und Bekanntmachung des Hinweises auf die Patenterteilung: **22.04.2020**
(21) Anmeldenummer: 12185227.1
(22) Anmeldetag: 03.02.2011
(51) Int. Cl.: G06F 21/55, G06F 21/57, G07F 19/00

(54) **Methode und Verfahren für PIN-Eingaben bei konsistentem Software-Stack auf Geldautomaten**
Method and process for PIN entries in a consistent software stack in cash machines
Méthode et procédé de saisie d'un code PIN en cas de pile logicielle importante sur un distributeur automatique de billets

(30) Priorität: 19.02.2010 DE 102010000482
(43) Veröffentlichungstag der Anmeldung: 02.01.2013
(62) Teilanmeldung aus: 11704745.6
(73) Patentinhaber: Wincor Nixdorf International GmbH, 33106 Paderborn (DE)
(72) Erfinder: Dr. Krummel, Volker, 33098 Paderborn (DE); Nolte, Michael, 33034 Brakel (DE); Runowski, Matthias, 33154 Salzkotten (DE)

(56) Entgegenhaltungen:
- EP-A2- 0 775 992
- EP-A2- 2 133 810
- WO-A1-00/48061
- US-A1- 2004 103 317
- US-A1- 2007 113 062
- US-B1- 7 658 321

## Beschreibung

Die Erfindung betrifft ein Verfahren und eine Vorrichtung zur Überprüfung der Konsistenz einer Steuerungssoftware eines Steuerrechners eines SB-Automaten, mit einer vertrauenswürdigen Domäne, die innerhalb des SB-Automaten angeordnet ist.

### Gebiet der Erfindung:

Zu Benutzereingaben an unbedienten Terminals, wie z.B. Geldausgabeautomaten, werden vorzugsweise Sicherheitstastaturen verwendet. Sicherheitstastaturen sind Peripheriegeräte bestehend aus einem Prozessor, Speicher, Kommunikationseinrichtung, Sicherheitsschaltung und Software (Firmware). Diese Tastaturen sind in einem Geldautomaten mit einem Steuerrechner, z.B. handelsüblicher PC mit Anzeigeeinheit über eine Standardschnittstelle, z.B. USB, RS232, verbunden. Die Sicherheitstastaturen haben folgende grundsätzliche Aufgaben
1. Eingaben der Geheimzahl (PIN) eines Bankkunden
2. Eingaben sonstiger numerischer Werte (z.B. Betragseingaben)
3. Schutz der eingegebenen und gespeicherten PIN
4. Ausführung kryptographischer Funktionen

Für die Eingabe der PIN werden diese Tastaturen von der Software, die auf einem Steuerrechner abläuft, in einen "Sicherheits-Modus" geschaltet. Dieser Modus bewirkt, dass Codes der Zifferntasten im Sicherheitsspeicher gespeichert werden und ein definierter Ersetzungscode pro Tastendruck an den Steuerrechner gemeldet wird. Im Umkehrschluss wird im "Klartext-Modus" der Zifferncode bei einem Tastendruck an den Steuerrechner gemeldet.

Diese Kombination von Klartext- und Sicherheits- Modus ist eine bekannte potentielle Schwachstelle, die zum Ausspionieren der PIN genutzt werden konnte. Zum Beispiel könnte eine schadhafte Software auf dem Steuerrechner einem Benutzer die Aufforderung zur PIN- Eingabe geben. In diesem Fall würde die Tastatur nicht in den Sicherheits- Modus geschaltet und die übermittelten Klartext- Codes, die die PIN repräsentieren, durch die schadhafte Software gesammelt werden.

Grundsätzlich ist es denkbar, die Verschlüsselung der Tastatur dauerhaft vorzunehmen, jedoch gibt es aufgrund der Anforderung der Betreiber die Möglichkeit der Klartextübertragung. So wird die Verschlüsselung immer dann genutzt, wenn PINs übertragen werden. Wird jedoch der Betrag der Transaktion angefordert, wird eine Anwendung des Betreibers/der Bank genutzt, die auf den SB-Automaten aufspielbar ist, so wird der Betrag im Klartext übertragen. Eine Tastatur wie sie bei der vorliegenden Erfindung eingesetzt wird, besteht im Wesentlichen aus einer Firmware, die einerseits ein Betriebsprogramm aufweist, dass die Basis-Ein- und Ausgabe vornimmt, und andererseits eine Ablaufsteuerung, die dafür verantwortlich ist, die Tastatur in den richtigen Modus umzuschalten. In dem SB-Automat arbeitet ein Steuerrechner, der beispielsweise als Personal-Computer ausgebildet sein kann, beziehungsweise entsprechende Komponenten verwendet. Auf diesem läuft eine Steuerungssoftware, die mit der Tastatur kommuniziert. Die Steuerungssoftware arbeitet über das Basis-Ein- und Ausgabe-System (auch Betriebsprogramm) zusammen, wohingegen die Ablaufsteuerung den Zustand der Tastatur in Abhängigkeit von anderen Parametern bestimmt.

Die Konsistenz des Steuerrechners bzw. dessen Steuerungssoftware erfolgt innerhalb einer Sicherheitsdomäne. Hierbei ist zu beachten, dass die Steuerung moderner Geldautomaten dem "Stand der Technik" nach durch handelsübliche PCs erfolgt, ausgestattet z.B. mit einem Windows Betriebssystem und Peripheriegeräten die über Standard-Schnittstellen wie USB (Universal Serial Bus) oder RS232 (Serial Interface) zur Kommunikation mit dem PC verbunden sind. Bedingt durch den hohen Standardisierungsgrad entstehen potentielle Schwachstellen die zur Infiltrierung mit schadhafter Software genutzt werden können. Als Beispiel sei an dieser Stelle das Einschleusen einer schadhaften Software mittels USB-Memory-Stick durch einen Service-Techniker genannt.

Verschiedene Anwendungs- Szenarien mittels schadhafter Software sind bekannt und können als "Stand der Technik" betrachtet werden.

Dem "Stand der Technik" entsprechende Schutzmechanismen für Windows basierende PCs haben für den Einsatz auf Geldautomaten Nachteile. Schutzmechanismen sind z.B. Virenscanner oder solche die die Integrität von Software Modulen messen (Integrity Client). Die Schwachstelle hierbei ist jedoch das gemeinsame Betriebssystem.

Der Schutzmechanismus der die Steuersoftware des Geldautomaten schützen soll, läuft unter demselben, mit potentiellen Schwachstellen behafteten Betriebssystem. Der Mechanismus ist durch einen Techniker, der mit entsprechenden Rechten ausgestattet ist, abschaltbar.

Ferner ist ein schlechtes Laufzeitverhalten gegeben. Signatur basierende Systeme haben ungewollten Einfluss auf Transaktionszeiten der Geldautomaten- Anwendung. Die Wartezeit auf eine Auszahlung erhöht sich, da permanent die gesamte Software des Steuerrechners geprüft werden muss. Werden Signaturprüfungen in der Einschaltphase durchgeführt, so verlängert sich diese Phase signifikant in einen unakzeptablen Bereich.

Alle auf einem Windows basierenden PC ablauffähigen Programme müssen von dem Schutzmechanismus erfasst werden. Zum Beispiel darf es einem Programm nicht möglich sein, durch einen "Buffer Overflow", Code zu injizieren. Dieses bedeutet, dass mindestens alle bekannten Programme geprüft werden müssen. Für die Software des Geldautomaten ist es wichtig, dass auch nicht ausführbare Dateien, z.B. Bilddateien, geprüft werden müssen. Zum Beispiel werden vielfach Bildschirmaufforderungen (PIN-Eingabeaufforderung) in einer Bilddatei abgelegt. Durch die Vielzahl unterschiedlicher Programme und Dateien von verschiedenen Herausgebern sind zentrale Lösungen fast unvermeidbar. Diese Lösungen erlauben weniger Flexibilität im Software Change Management für den Hersteller der Geldautomaten Software.

Der Einsatz von Virenscannern stellt einen weiteren Nachteil dar, da eine zentrale Funktion zur Verteilung der Signaturen benötigt wird, und diese kann speziell für den Geldautomaten entwickelte Schadsoftware nicht erkennen.

Weitere Schutzmaßnahmen können durch einen Integrity- Client, erreicht werden. Dieser bildet zwar einen sehr guten Schutz zur Laufzeit, bietet jedoch keinen Schutz im ausgeschalteten Zustand.

Als eine weitere Alternative kann eine Festplattenverschlüsselung betrachtet werden, diese schützt das System im ausgeschalteten Zustand, kann jedoch nicht die Konsistenz der Software prüfen.

Aus der EP 0775 992A2 ist ein Verfahren bekannt, bei der der Zugriff auf die Geldauszahlungseinheit in Abhängigkeit des Zustandes des Automaten eingeschränkt wird. Aus der US 2004/0103317 A1 ist ein Verfahren zum sicheren Zugriff auf einen Computer bekannt. Aus der WO 00/48061 A1 ist ein Verfahren zum Schutze der Modifikation eines Computers bekannt. Aus der EP 2133 810A2 ist ein Verfahren zur Absicherung einer Tastatur bekannt.

### Überblick über die Erfindung:

Ziel dieser Erfindung ist es, die Möglichkeit einer Klartexteingabe so zu beschränken, dass diese nur dann möglich ist, wenn die Steuersoftware konsistent ist. Hierfür ist es in einem ersten Schritt notwendig die Konsistenz der Software zu prüfen. Eine weitere Option ist es, dem Benutzer einen Hinweis auf die Konsistenz der Software des Steuerrechners des SB-Automaten zu geben, indem eine LED die Konsistenz der Steuerungssoftware signalisiert. Es ist auch denkbar, dass die Tastatur über Relais das System abschaltet bzw. die Tastatur deaktiviert wird. Noch eine weitere Aufgabe ist die Überprüfung der Konsistenz der Software des Steuerrechners.
Gelöst werden die Aufgaben durch eine Erfindung mit den Merkmalen der unabhängigen Ansprüche. Die Unteransprüche stellen vorteilhafte Ausgestaltungen dar.
Bei dem erfinderischen Verfahren zur Überprüfung der Konsistenz einer Steuerungssoftware eines Steuerrechners eines SB-Automaten, bei dem es sich beispielsweise um einen Geldautomaten handelt, wird eine vertrauenswürdige Domäne eingesetzt, die innerhalb des SB-Automaten angeordnet ist.

In einer möglichen Ausführungsform handelt es sich bei der sicheren Domäne, um ein zusätzliches Betriebssystem, das entweder auf einer eigenen Hardware läuft, wie zum Beispiel als Prozessorsteckkarte im Steuerrechner des SB-Automaten, oder als integriertes Betriebssystem, das vor dem Starten der Steuerungssoftware ausgeführt wird. Es ist auch denkbar einen virtuellen Rechner auf dem Steuerungsrechner zu betreiben, der die sichere Domäne darstellt. Dabei muss jedoch der Virtualisierungs-Host möglichst hardwarebasiert sein, damit ein Unterschieben von schadhaftem Code vermieden wird. So kann z.B. die sichere Domäne auf einem gesicherten Speicherbereich abgelegt sein, wie zum Beispiel einer Smartcard oder Krypto-Card, die beim Booten zuerst aufgerufen wird, um dann eine Überprüfung der Festplatte beziehungsweise des Datenträgers des Steuerrechners durchzuführen. Die Freigabe der Informationen der Smartcard oder Krypto-Card kann entweder durch einen Servicetechniker erfolgen, wenn der SB-Automat bootet, oder auf der Basis der Hardwareerkennung beziehungsweise der Seriennummern des Steuerrechners.
Die sichere Domäne überprüft die Steuerungssoftware auf deren Konsistenz, und im Falle einer Inkonsistenz wird ein Sperrsignal erzeugt, das zur Einschränkung der Funktionalität des SB-Automaten verwendet wird. Die Überprüfung der Konsistenz kann durch Signaturen und/oder Hashwerte erfolgen, die die sichere Domäne verwaltet. Die Verwaltung kann ebenfalls über einen gesicherten/verschlüsselten Bereich der Smart-Card erfolgen. Die Smart-Card kann z.B. im Tresor abgelegt sein. Um die Belastung gerade beim Start des Systems zu verringern, werden dabei nicht alle Dateibereiche beziehungsweise nicht der vollständige Datenträger des Steuerrechners überprüft, sondern lediglich relevante Bereich. Es ist auch denkbar, dass lediglich die Dateien überprüft werden, die ein bestimmtes Veränderungsdatum aufweisen oder die gerade erst verändert wurde. Eine Selektion der überprüfenden Dateien beziehungsweise Informationen ist möglich. Es ist ebenfalls möglich, dass die sichere Domäne mit neuen Informationen beziehungsweise neuen Hashs, Signaturen versehen wird, falls ein Update der Steuerungssoftware erfolgt ist. Die Bereitstellung von solchen Informationen kann auf unterschiedlichen Wegen erfolgen.

Die sichere Domäne erzeugt ein Sperrsignal für eine Peripheriekomponente, um deren Funktionalität zu beschränken. Dieses Sperrsignal kann ein gesicherter Software-Flag sein, der mit einer Signatur versehen ist, damit die Herkunft bestimmt werden kann, oder über eine dezidierte Leitung erfolgen. Im Falle einer Konsistenz wird ein Freigabesignal für die Peripheriekomponente erzeugt, um deren volle Funktionalität zu aktivieren. Im Falle einer Inkonsistenz wird ein Sperrsignal erzeugt, das die Funktionalität der Peripheriekomponente einschränkt.

Die entsprechende Signatur oder Verschlüsselung der Signale kann mit Hilfe einer Smart Card erzeugt werden, die im SB-Automaten angeordnet ist, und die vorzugsweise in einem Tresor abgelegt ist. Durch die physikalische Anordnung der Smartcard im Tresor des Geldautomaten wird ein unberechtigter Zugriff auf die Smartcard und deren Manipulation erschwert.

Erfindungsgemäß ist die Peripheriekomponente eine Tastatur. Im Folgenden wird ein möglicher Ablauf in Bezug auf eine Tastatur beschrieben.

So weist die Tastatur eine Ablaufsteuerung auf, die eine Klartexteingabe nur dann erlaubt, wenn das Freigabesignal vorliegt. Damit die Tastatur auch bei einem Neustart in einem definierten Zustand ist, setzt sich die Tastatur bei einem Netzstromaus in einen Modus, der keine Klartexteingabe erlaubt.
Zusätzlich wird dem Benutzer angezeigt, dass eine Eingabe in einem Klartextmodus erfolgt. Hierbei kann z.B. auf dem Gerät eine Leuchte vorgesehen seien, die neben der Tastatur oder im Bereich der Tastatur angeordnet ist, und die dem Benutzer zeigt, dass nun unverschlüsselt Daten übermittelt werden. Hierdurch kann bei einem möglichen Angriff auf das Gerät der Benutzer selber erkennen, dass er einen möglichen PIN unverschlüsselt eingibt, was auf eine Inkonsistenz des Automaten hinweist. Es ist auch denkbar, dass bei einem Hinweis auf eine Inkonsistenz und der Übermittlung eines entsprechenden Signals, die Tastatur über eine weitere Schnittstelle, zum Beispiel zum Netzteil, das gesamte System runterfährt.

Es gibt grundsätzlich mehrere zeitliche Ansätze, die eine Überprüfung der Steuerungssoftware durch die sichere Domäne verfolgen.
In einer ersten Phase wird vor dem Starten der Steuerungssoftware, z.B. in der Pre-Bootphase die Steuerungssoftware auf dem Datenträger überprüft. Nur wenn die Überprüfung erfolgreich ist, wird der Boot-Prozess fortgeführt und die Steuerungssoftware gestartet.

In der zweiten Phase wird nach dem Booten der Steuerungssoftware ein Prozess gestartet, der die Konsistenz der Steuerungssoftware während des Betriebs einmalig oder zyklisch überprüft. Dieser Prozess kann innerhalb der Steuerungssoftware angeordnet sein, z.B. ein Dienst im Windows-Betriebssystem, oder ein Prozess, der auf einem Parallelen-Betriebssystem arbeitet.

Ein weiterer Teil der Erfindung ist der SB-Automat, dieser umfasst einen Steuerrechner, der durch eine Steuerungssoftware gesteuert wird. Hierbei kann es sich z.B. um einen herkömmlichen PC-Handeln, der über serielle Schnittstellen mit externen Komponenten verbunden ist. Innerhalb des PCs ist eine vertrauenswürdige Domäne als Hardware, Software oder einer Kombination davon ausgebildet. Wie bereits oben ausgeführt prüft die sichere Domäne die Steuerungssoftware auf Konsistenz. Im Falle einer Inkonsistenz wird an eine Peripheriekomponente über eine dezidierte Verbindung oder über einen gemeinsamen Arbeitsspeicherbereich ein Sperrsignal übertragen. Die Komponente weist eine Ablaufsteuerung auf, die die Funktionalität des SB-Automaten und/oder der Peripheriekomponente beschränkt.

Ein weiterer Teil der Erfindung ist eine SB-Automat-Tastatur, die eine Ablaufsteuerung aufweist, die eine Klartexteingabe und eine verschlüsselte Tastatureingabe erlaubt. Hierbei ist ein Signaleingang gegeben, der logisch oder physikalisch aufgebaut sein kann, wobei eine Ablaufsteuerung, eine Klartexteingabe nur dann erlaubt, wenn ein Freigabesignal am Signaleingang anliegt. Bei einem logischen Signaleingang wird ein verschlüsselter Wert oder ein signierter Wert über den Standardkommunikationskanal übertragen, wie USB, RS232 etc. Bei einem physikalischen Signaleingang erfolgt die Übergabe über einen anderen Kanal.

### Figurenbeschreibung:

Im Folgenden wird auf die Figuren eingegangen, die kurz beschrieben werden, und worauf sich die folgende Beschreibung bezieht.
Figur 1 zeigt einen SB-Automaten mit einer Steuerungssoftware und einer sicheren Domäne, die mit einem externen Gerät verbunden ist;
Figur 2 zeigt einen Zustandsautomat einer Chipkarte, die die Checksummen der Steuerungssoftware verwaltet;
Figur 3 zeigt einen SB-Automaten mit einer Tastatur, die eine Ablaufsteuerung aufweist;

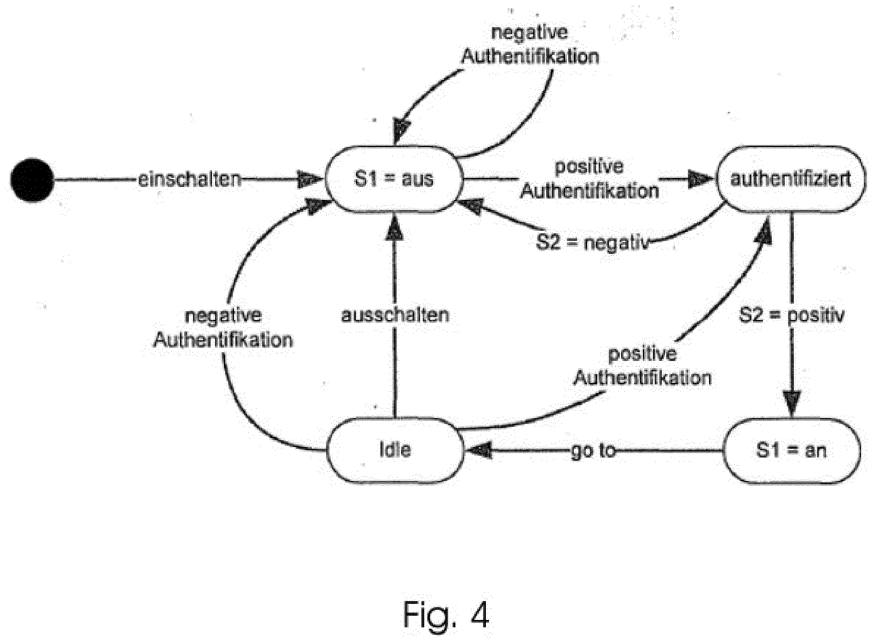

Figur 4 zeigt einen Zustandsautomat der Ablaufsteuerung.

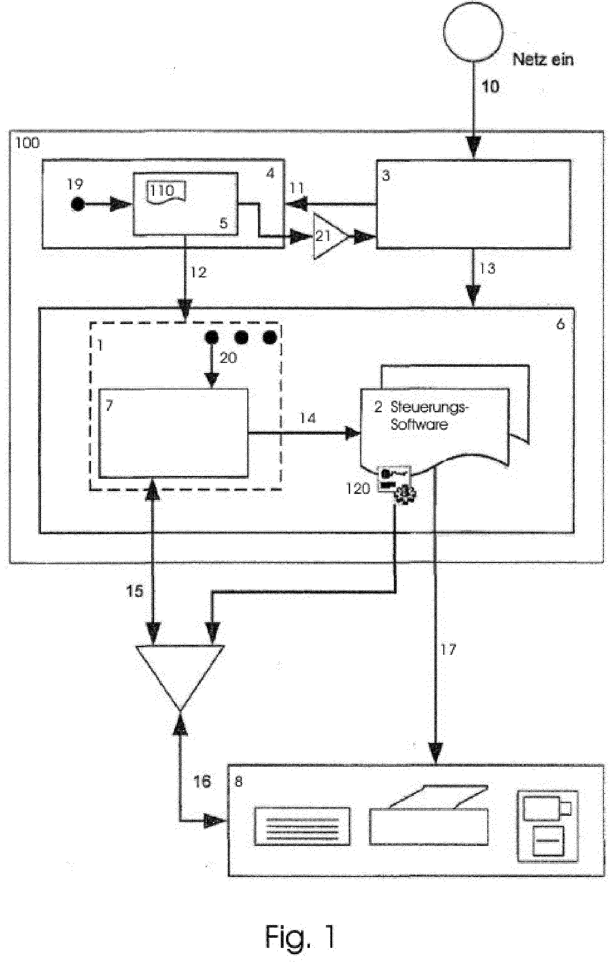

Die grundsätzliche Idee liegt darin eine vertrauenswürdige Domäne 1 auf dem Steuerrechner des PCs zu schaffen, wie in Figur 1 gezeigt wird. Diese hat die Aufgabe die Steuerungssoftware 2, die ausschließlich für den reibungslosen Betrieb eines Geldautomaten zuständig ist, auf dessen Konsistenz zu prüfen. Im Falle, dass eine Konsistenz oder Inkonsistenz festgestellt ist, wird ein Sperr- oder Freigabesignal für eine Peripheriekomponente 8 erzeugt. Beispielsweise kann das Signal zur Freischaltung der Tastatur, oder zum Sperren des Auszahlcontrollers und damit verbunden der Geldausgabe o.a. genutzt werden. Das Freischalt- oder Sperrsignal wird bevorzugt durch eine Smart Card erzeugt, die manipulationssicher im Tresor des Geldautomaten untergebracht ist. Kennzeichnend für die Lösung ist eine stufenweise Prüfung auf Integrität während einer Pre-Bootphase und der eigentlichen Betriebsphase. Durch die abgestufte Prüfung soll eine erhöhte Performanz erreicht werden.

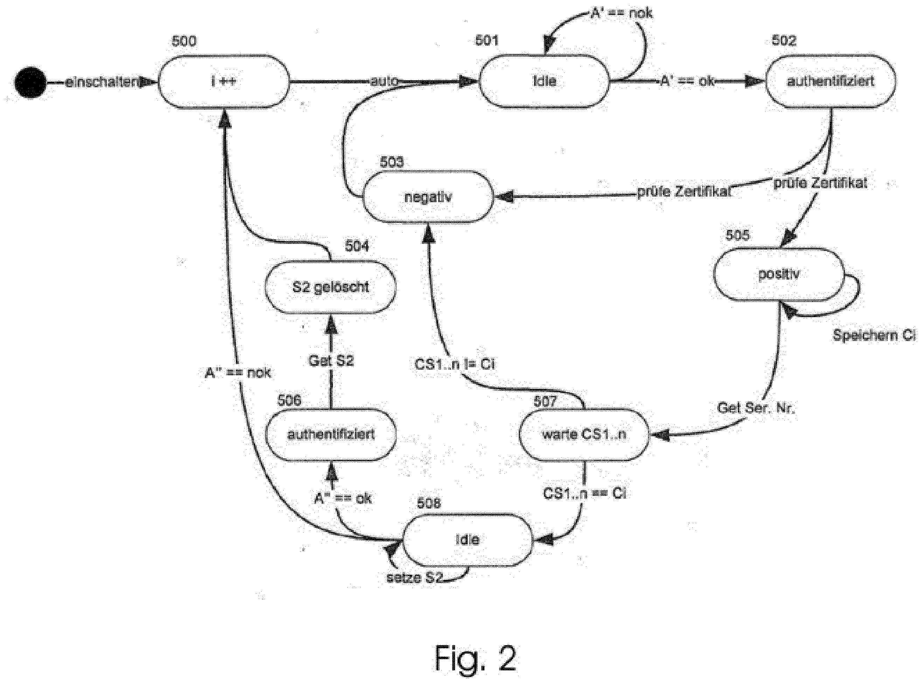

Auf dem Steuerrechner 100 wird zum eigentlichen Windows Betriebssystem 6 ein weiteres speziell gehärtetes Betriebssystem auf Unix Basis 4 installiert. Unter Härten versteht man in der Computertechnik, die Sicherheit eines Systems zu erhöhen, indem nur dedizierte Software eingesetzt wird, die für den Betrieb des Systems notwendig ist und deren unter Sicherheitsaspekten korrekter Ablauf garantiert werden kann. Das System soll dadurch besser vor externen Angriffen geschützt sein. Das Bundesamt für Sicherheit in der Informationstechnik bezeichnet als Härten in der IT-Sicherheit "[...] die Entfernung aller Softwarebestandteile und Funktionen, die zur Erfüllung der vorgesehenen Aufgabe durch das Programm nicht zwingend notwendig sind."[2].
Ziel ist es, ein System zu schaffen, das von vielen, auch weniger vertrauenswürdigen Personen benutzt werden kann. Beispielsweise gibt es für Gentoo Linux das hardened-Projekt, das eine Kernel-Version sowie weitere Systemdienste zusammenstellt, mit denen ein sicheres Linux-System auch für fremde Nutzer bereitgestellt werden kann. Andere Betriebssysteme sind denkbar. Die Idee hinter dieser Lösung ist, in einem ersten Schritt in einer Pre-Bootphase, wenige Dateien die für das Verhalten der Domäne 1 verantwortlich sind, zu prüfen. Diese Dateien stellen dann einen Prozess dar, der gestartet wird, wenn Windows gestartet wurde. Besonders vorteilhaft ist die Überprüfung durch eine Schadsoftwareresistente Instanz. Zusätzlich kann diese erste Instanz auch mit Mechanismen des Trusted Computing Konzeptes überprüft werden. Ein weiterer Vorteil ist, dass die Pre-Bootphase beschleunigt wird da nur wenige Dateien geprüft werden. Die Boot- Reihenfolge wird z.B. durch einen Standard Boot- Lader 3 gesteuert, kann auch vom Bios des Rechners vorgegeben werden. Letzterer wird nach dem Netz- Ein 10 das Unix basierende System laden. In einem Initialisierungsprozess 19 wird ein Dämon 5 gestartet, der anhand einer Liste 110 alle der Domäne 1 zugeordneten Dateien auf deren Konsistenz 50 überprüft 12. Im Fall der positiven Überprüfung wird ein Signal 21 für den Boot-Lader gesetzt; aufgrund dessen in einem zweiten Schritt das Windows Betriebssystem gestartet wird 13. Im Fall der Inkonsistenz wird der Bootvorgang abgebrochen.
Nach der zweiten Bootphase werden durch das Windows Betriebssystem bestimmte Services gestartet. Ein Service 20 startet ein Checksummenprogramm 7, welches die Konsistenz der Steuerungssoftware 2 prüft. Die Prüfung kann einmalig vor der eigentlichen Betriebsphase des Geldautomaten erfolgt sein und dann zyklisch in der Betriebsphase erfolgen. Oder eine Prüfung erfolgt ausschließlich in der Betriebsphase. Bei letzterem ist es vorteilhaft das bei festgestellter Inkonsistenz der Betrieb einer Komponente eingeschränkt oder sogar abgeschaltet wird. Besonders vorteilhaft ist es, wenn die Steuerungssoftware mit einem Zertifikat ausgestattet ist. Das Zertifikat kann gegen einen Schlüssel geprüft werden, der in der Sicherheitsdomäne 1 abgelegt ist. Optional können auch hier Mechanismen des Trusted Computing Konzeptes genutzt werden, bei dem ein entsprechender CryptoChip auf dem Motherboard des Rechners angeordnet ist.
Vorteilhafter ist eine Überprüfung durch eine Smart Card 9 die im Tresor des Geldautomaten untergebracht ist. Die Smart Card verfügt über einen Schutzmechanismus, der gegen das Wiedereinspielen von alten Prüfsummen schützt 15, siehe Fig. 2. Des Weiteren verfügt die Smart Card über einen Mechanismus der ein Signal bei positiver oder negativer Zertifikatsprüfung erzeugt. Weiterhin besitzt die Karte ein Geheimnis das sie mit einer Peripheriekomponente 8 teilt, ein weiteres das sie mit dem Checksummenprogramm 7 teilt. Über diese Geheimnisse können verschlüsselte Sicherheitsprotokolle 15, 16 realisiert werden. Bei inkonsistenter Steuerungssoftware kann das Signal zum Abschalten der z.B. PIN-Eingabetastatur genutzt werden. Es ist auch denkbar, den gesamten Automaten herunterzufahren oder andere Komponenten abzuschalten.

Wie in Fig. 2 gezeigt, muss verhindert werden, dass ungültige Prüfsummen in das System eingebracht werden. Von einem Unbefugten erzeugte Prüfsummen werden im System aufgrund von Authentisierungsmechanismen wie z.B. digitalen Signaturen erkannt und dann abgewiesen. Das Einspielen alter Signaturstände wird durch geeignete Metadaten wie z.B. aufsteigende Seriennummern erkannt.
Diese werden beispielsweise von der Chipkarte erzeugt, gespeichert und kontrolliert. Hier können Verfahren aus dem Stand der Technik genutzt werden (Challenge-ResponseVerfahren).

Die Authentisierungsprüfung der Prüfsumme(n) wird durch die Chipkarte unterstützt bzw. abgesichert. Derartige Maßnahmen verhindern also das Einspielen manipulierter Prüfsummendaten, das Manipulieren bzw. Wiedereinspielen einzelner Prüfsummen, sowie das Manipulieren bzw. Wiedereinspielen ganzer Sätze von Prüfsummen für das gesamte System.

Der hier beispielhaft skizzierte Zustandsautomat einer Chipkarte verhindert das erneute Einspielen von Checksummen und damit verbunden ein erneutes Erzeugen eines Freigabe- oder Sperrsignales. Nach dem Einschalten, Zustand 500, wird ein interner Zahler erhöht und persistent gespeichert. Zustand 501, die Karte wartet auf die Authentisierung des Checksummenprogramms (7(A')). Zustand 502, bei positiver Authentisierung ist die Instanz authentifiziert und die Zertifikatsprüfung kann ausgeführt werden. Zustand 503, es liegt eine negative Zertifikatsprüfung vor.
Im Zustand 505 liegt eine positive Zertifikatsprüfung vor, es wird eine Checksummeninformation aus dem Zertifikat entnommen und zwischengespeichert.

Die Karte gibt den aktuellen Zahlerstand frei, dieser wird von 7 zur folgenden Prüfung der Checksummen an die Karte zurückgegeben. Zustand 507, die Karte wartet auf die Prüfsumme(n)/ Zahlerstand die 7 ermittelt hat.
Zustand 508, nach positiver Prüfung der Informationen i, CI und CS1 ... n wird eine Freigabe oder Sperrinformation (S2) erzeugt und auf die Authentisierung der Instanz (8(A")) gewartet.
Zustand 506, bei positiver Authentisierung ist die Instanz authentifiziert und es kann das Signal S2 abgefragt werden. Zustand 504, in diesem Zustand ist das Signal S2 gelöscht und der Zählerstand wird automatisch erhöht.

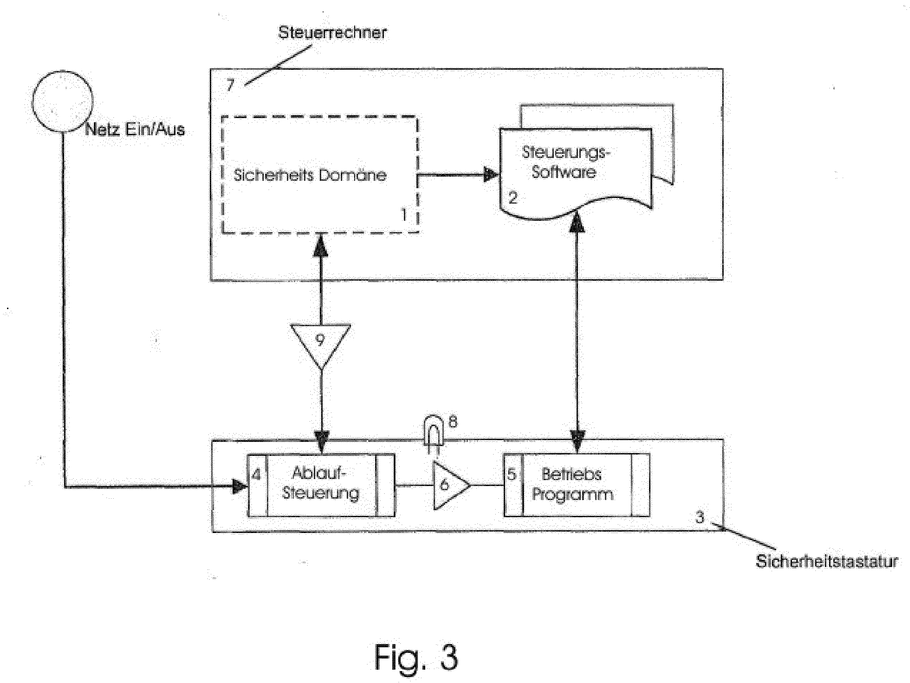

In der Fig. 3 wird nochmal auf die Kombination des SB-Automaten und der Tastatur eingegangen. Die Sicherheitstastatur 3 besitzt neben dem Betriebsprogramm 5 eine Ablaufsteuerung 4, die ein Signal Sl 6 für das Betriebsprogramm setzt. Erkennt das Betriebsprogramm das Sl gesetzt ist, so wird die Klartexteingabe zugelassen. Zusätzlich kann durch das gesetzte Signal Sl 6 z.B. eine LED 8 für den Endbenutzer eingeschaltet werden und damit ein konsistentes Steuerungsprogramm signalisieren. Das Signal wird nur dann gesetzt, wenn eine Sicherheits- Domäne 1 die Integrität einer Anwendung 2 auf dem Steuerrechner 7 geprüft hat und ein Signal S2 9 an die Ablaufsteuerung 4 sendet. Bei einem Netz-Aus und Netz-Ein fällt das Signal Sl 6 zurück. Durch letzteres soll gewährleistet werden das das Betriebsprogramm der Tastatur immer nach dem Einschalten die Klartexteingabe unterbindet. Das Signal S2 9 wird vorzugsweise in ein Sicherheitsprotokoll eingebettet, um sogenannte "Replay-Attacken" zu verhindern. Das Sicherheitsprotokoll kann dem Stand der Technik entnommen werden.

## Patentansprüche

1. Verfahren zur Überprüfung der Konsistenz einer Steuerungssoftware eines Steuerrechners eines SB-Automaten, mit einer vertrauenswürdigen Domäne (1), die innerhalb des SB-Automaten angeordnet ist, umfassend die Schritte:
- Überprüfen der Steuerungssoftware (2) auf deren Konsistenz, durch die vertrauenswürdige Domäne (1);
- im Falle einer Inkonsistenz wird ein Sperrsignal für eine Peripheriekomponente (8) des SB-Automaten durch die vertrauenswürdige Domäne (1)erzeugt, das zur Einschränkung der Funktionalität des SB-Automaten verwendet wird, wobei die Peripheriekomponente eine Tastatur ist, die eine Klartexteingabe und eine verschlüsselte Tastatureingabe erlaubt, ferner weist die Tastatur eine Ablaufsteuerung auf, die bei Vorliegen des Sperrsignals die Funktionalität der Tastatur einschränkt indem die Klartexteingabe nicht erlaubt wird,;
- im Falle einer Konsistenz wird ein Freigabesignal für die Tastatur durch die vertrauenswürdige Domäne (1)erzeugt, um deren volle Funktionalität zu aktivieren, wobei die Ablaufsteuerung eine Klartexteingabe nur bei Vorliegen des Freigabesignals erlaubt.

2. Das Verfahren nach dem vorhergehenden Anspruch, wobei das Freigabesignal und/oder das Sperrsignal mit Hilfe einer Smart Card erzeugt werden, die im SB-Automaten angeordnet ist, und die vorzugsweise in einem Tresor abgelegt ist.

3. Das Verfahren nach einem oder mehreren der vorhergehenden zwei Ansprüche, wobei ein optisches und/oder akustisches Signal für den Benutzer ersichtlich ausgegeben wird, wenn eine Klartexteingabe zugelassen wird.

4. Das Verfahren nach einem oder mehreren der vorhergehenden Ansprüche, wobei die vertrauenswürdige Domäne ein gehärtetes Betriebssystem ist, das parallel zur Steuerungssoftware auf dem Steuerungsrechner installiert ist, und das die Steuerungssoftware auf Konsistenz überprüft.

5. Das Verfahren nach einem oder mehreren der vorhergehenden Ansprüche, wobei in der Pre-Bootphase die Steuerungssoftware überprüft wird und/oder wobei nach dem Booten der Steuerungssoftware ein Prozess gestartet wird, der die Konsistenz der Steuerungssoftware während des Betriebs einmalig oder zyklisch überprüft.

6. Das Verfahren nach einem oder mehreren der vorhergehenden Ansprüche, wobei die Steuerungssoftware mit einem Zertifikat ausgestattet ist, und wobei das Zertifikat durch die Sicherheitsdomäne geprüft wird, um festzustellen, ob die Steuerungssoftware korrumpiert ist und wobei vorzugsweise die Steuerungssoftware durch eine Smart-Card überprüft wird, die in einem Tresor angeordnet ist.

7. Das Verfahren nach einem oder mehreren der vorhergehenden Ansprüche, wobei sich die Tastatur bei einem Netzstromaus in einen Modus setzt, der keine Klartexteingabe erlaubt.

8. SB-Automat umfassend:
- einen Steuerrechner, der ausgebildet ist, um durch eine Steuerungssoftware gesteuert zu werden;
- eine vertrauenswürdige Domäne (1), die innerhalb des SB-Automaten angeordnet ist, und die ausgebildet ist, um die Steuerungssoftware auf Konsistenz zu prüfen, um im Falle einer Inkonsistenz ein Sperrsignal zu erzeugen, das zur Einschränkung der Funktionalität des SB-Automaten verwendet wird, und um im Falle einer Konsistenz ein Freigabesignal zu erzeugen;
umfassend eine Peripheriekomponente (8), die als Tastatur ausgebildet ist, und die eine Ablaufsteuerung aufweist, um das Sperrsignal und das Freigabesignal zu empfangen, und der Tastatur eine Klartexteingabe und eine verschlüsselte Tastatureingabe zu erlauben;
und die Ablaufsteuerung die so ausgebildet ist, dass bei Vorliegen des Freigabesignals die volle Funktionalität der Tastatur aktiviert wird, bei der eine Klartexteingabe erlaubt ist, und bei Vorliegen des Sperrsignals die Funktionalität der Tastatur eingeschränkt wird, so dass keine Klartexteingabe erlaubt ist.

9. SB-Automat nach dem vorhergehenden SB-Automat-Anspruch, umfassend eine Smart Card, die das Freigabesignal und/oder das Sperrsignal verarbeiten, wobei die Smart Card vorzugsweise in einem Tresor abgelegt ist.

10. SB-Automat-nach einem oder mehreren der vorhergehenden zwei Ansprüche, wobei ein optischer und/oder akustischer Signalgeber für den Benutzer vorhanden ist, wobei der Signalgeber konfiguriert ist, um ein optisches und/oder akustisches Signal für den Benutzer ersichtlich auszugeben, wenn eine Klartexteingabe zugelassen wird.

11. SB-Automat nach einem oder mehreren der vorhergehenden SB-Automaten-Ansprüche, wobei die vertrauenswürdige Domäne ein gehärtetes Betriebssystem ist, das parallel zur Steuerungssoftware auf dem Steuerungsrechner installiert ist, und das die Steuerungssoftware auf Konsistenz überprüft.

12. SB-Automat-nach einem oder mehreren der vorhergehenden zwei Ansprüche, ausgebildet, um in der Pre-Bootphase die Steuerungssoftware zu überprüfen und/ oder durch einen Prozess, der nach dem Booten der Steuerungssoftware gestartet ist, der die Konsistenz der Steuerungssoftware während des Betriebs einmalig oder zyklisch überprüft.

13. SB-Automat nach einem oder mehreren der vorhergehenden SB-Automat-Ansprüche, wobei die Steuerungssoftware mit einem Zertifikat ausgestattet ist, und wobei das Zertifikat durch die vertrauenswürdige Domäne überprüfbar ist, um festzustellen, ob die Steuerungssoftware konsistent ist und wobei vorzugsweise die Steuerungssoftware durch eine Smart-Card überprüfbar ist, die in einem Tresor angeordnet ist.

14. SB-Automat nach einem oder mehreren der vorhergehenden SB-Automat-Ansprüche, **gekennzeichnet durch** eine Einrichtung, die so konfiguriert ist, dass die Tastatur sich bei einem Netzstromaus in einen Modus setzt, der keine Klartexteingabe erlaubt.

## Claims

1. Method for checking the consistency of control software of a control computer of a self-service machine, having a trusted domain (1) that is arranged within the self-service machine, comprising the steps of:
- checking the control software (2) in terms of its consistency by way of the trusted domain (1);
- in the event of an inconsistency, a blocking signal is generated for a peripheral component (8) of the self-service machine by the trusted domain (1), which blocking signal is used to restrict the functionality of the self-service machine, wherein the peripheral component is a keypad that permits a plain text input and an encrypted keypad input, and the keypad furthermore has a sequence controller that restricts the functionality of the keypad when the blocking signal is present by not permitting the plain text input;
- in the event of a consistency, an enable signal is generated for the keypad by the trusted domain (1) in order to activate the full functionality thereof, wherein the sequence controller permits a plain text input only when the enable signal is present.

2. Method according to the preceding claim, wherein the enable signal and/or the blocking signal are generated using a smart card that is arranged in the self-service machine and that is preferably stored in a vault.

3. Method according to one or more of the two preceding claims, wherein an optical and/or acoustic signal is output in a manner discernible to the user when a plain text input is permitted.

4. Method according to one or more of the preceding claims, wherein the trusted domain is a hardened operating system that is installed in parallel with the control software on the control computer and that checks the control software in terms of consistency.

5. Method according to one or more of the preceding claims, wherein the control software is checked in the pre-boot phase and/or wherein a process that checks the consistency of the control software once or cyclically during operation is started after the control software is booted.

6. Method according to one or more of the preceding claims, wherein the control software is equipped with a certificate, and wherein the certificate is checked by the security domain in order to establish whether the control software is corrupted, and wherein the control software is preferably checked by a smart card that is arranged in a vault.

7. Method according to one or more of the preceding claims, wherein the keypad goes into a mode that does not permit a plain text input in the event of a power outage.

8. Self-service machine comprising:
- a control computer that is designed to be controlled by control software;
- a trusted domain (1) that is arranged within the self-service machine and that is designed to check the control software in terms of consistency in order to generate a blocking signal in the event of an inconsistency, which blocking signal is used to restrict the functionality of the self-service machine, and to generate an enable signal in the event of a consistency;
comprising a peripheral component (8) that is designed as a keypad and that has a sequence controller in order to receive the blocking signal and the enable signal, and to permit a plain text input and an encrypted keypad input on the keypad;
and the sequence controller is designed such that, when the enable signal is present, the full functionality of the keypad, in which a plain text input is permitted, is activated, and the functionality of the keypad is restricted when the blocking signal is present, such that a plain text input is not permitted.

9. Self-service machine according to the preceding self-service machine claim, comprising a smart card that processes the enable signal and/or the blocking signal, wherein the smart card is preferably stored in a vault.

10. Self-service machine according to one or more of the two preceding claims, wherein an optical and/or acoustic signaller is present for the user, wherein the signaller is configured so as to output an optical and/or acoustic signal in a manner discernible to the user when a plain text input is permitted.

11. Self-service machine according to one or more of the preceding self-service machine claims, wherein the trusted domain is a hardened operating system that is installed in parallel with the control software on the control computer and that checks the control software in terms of consistency.

12. Self-service machine according to one or more of the two preceding claims, designed to check the control software in the pre-boot phase and/or that checks the consistency of the control software once or cyclically during operation by way of a process that is started after the control software is booted.

13. Self-service machine according to one or more of the preceding self-service machine claims, wherein the control software is equipped with a certificate, and wherein the certificate is able to be checked by the trusted domain in order to establish whether the control software is consistent, and wherein the control software is preferably able to be checked by a smart card that is arranged in a vault.

14. Self-service machine according to one or more of the preceding self-service machine claims, **characterized by** a device that is configured such that the keypad goes into a mode that does not permit a plain text input in the event of a power outage.

## Revendications

1. Procédé de vérification de la cohérence d'un logiciel de commande d'un ordinateur de commande d'un distributeur automatique, ayant un domaine de confiance (1) qui est disposé à l'intérieur du distributeur automatique, comprenant les étapes suivantes :
- vérification de la cohérence du logiciel de commande (2) par le domaine de confiance (1) ;
- dans le cas d'une incohérence, un signal de verrouillage pour un composant périphérique (8) du distributeur automatique est généré par le domaine de confiance (1), lequel est utilisé pour restreindre la fonctionnalité du distributeur automatique, le composant périphérique étant un clavier qui permet une saisie en texte clair et une saisie sur clavier cryptée, le clavier possédant en outre une commande séquentielle qui, en présence du signal de verrouillage, restreint la fonctionnalité du clavier en ce que la saisie en texte clair n'est pas autorisée ;
- dans le cas d'une cohérence, un signal de libération pour le clavier est généré par le domaine de confiance (1) afin d'activer sa pleine fonctionnalité, la commande séquentielle n'autorisant une saisie en texte clair qu'en présence du signal de libération.

2. Procédé selon la revendication précédente, le signal de libération et/ou le signal de verrouillage étant générés à l'aide d'une carte à puce qui est disposée dans le distributeur automatique et qui est de préférence déposée dans un coffre-fort.

3. Procédé selon l'une ou plusieurs des deux revendications précédentes, un signal visuel et/ou sonore visible de l'utilisateur étant délivré lorsqu'une saisie en texte clair est autorisée.

4. Procédé selon l'une ou plusieurs des revendications précédentes, le domaine de confiance étant un système d'exploitation renforcé qui est installé en parallèle du logiciel de commande sur l'ordinateur de commande et qui vérifie la cohérence du logiciel de commande.

5. Procédé selon l'une ou plusieurs des revendications précédentes, le logiciel de commande étant vérifié dans la phase de prédémarrage et/ou un processus qui vérifie la cohérence du logiciel de commande une fois ou cycliquement pendant le fonctionnement étant lancé après le démarrage.

6. Procédé selon l'une ou plusieurs des revendications précédentes, le logiciel de commande étant pourvu d'un certificat et le certificat étant vérifié par le domaine de sécurité afin de constater si le logiciel de commande est corrompu et le logiciel de commande étant de préférence vérifié par une carte à puce qui est disposée dans un coffre-fort.

7. Procédé selon l'une ou plusieurs des revendications précédentes, le clavier, en cas de panne du réseau électrique, se plaçant dans un mode qui n'autorise pas de saisie en texte clair.

8. Distributeur automatique, comprenant :
- un ordinateur de commande, qui est configuré pour être commandé par un logiciel de commande ;
- un domaine de confiance (1), qui est disposé à l'intérieur du distributeur automatique et qui est configuré pour vérifier la cohérence du logiciel de commande afin de, dans le cas d'une incohérence, générer un signal de verrouillage pour restreindre la fonctionnalité du distributeur automatique et, dans le cas d'une cohérence, générer un signal de libération ; comprenant un composant périphérique (8) qui est réalisé sous la forme d'un clavier et qui possède une commande séquentielle afin de recevoir le signal de verrouillage et le signal de libération, et autoriser au clavier une saisie en texte clair et une saisie au clavier cryptée ; et la commande séquentielle, qui est configurée de telle sorte qu'en présence du signal de libération, la pleine fonctionnalité du clavier, avec laquelle une saisie en texte clair est autorisée, est activée et, en présence du signal de verrouillage, la fonctionnalité du clavier est restreinte, de sorte qu'aucune saisie en texte clair n'est autorisée.

9. Distributeur automatique selon la revendication de distributeur automatique précédente, comprenant une carte à puce qui traite le signal de libération et/ou le signal de verrouillage, la carte à puce étant de préférence déposée dans un coffre-fort.

10. Distributeur automatique selon l'une ou plusieurs des deux revendications précédentes, un transmetteur de signal visuel et/ou sonore étant présent pour l'utilisateur, le transmetteur de signal étant configuré pour délivrer un signal visuel et/ou sonore de manière visible pour l'utilisateur lorsqu'une saisie en texte clair est autorisée.

11. Distributeur automatique selon l'une ou plusieurs des revendications de distributeur automatique précédentes, le domaine de confiance étant un système d'exploitation renforcé qui est installé en parallèle du logiciel de commande sur l'ordinateur de commande et qui vérifie la cohérence du logiciel de commande.

12. Distributeur automatique selon l'une ou plusieurs des deux revendications précédentes, configuré pour vérifier le logiciel de commande dans la phase de prédémarrage et/ou par un processus qui est lancé après le démarrage et qui vérifie la cohérence du logiciel de commande une fois ou cycliquement pendant le fonctionnement.

13. Distributeur automatique selon l'une ou plusieurs des revendications de distributeur automatique précédentes, le logiciel de commande étant pourvu d'un certificat et le certificat pouvant être vérifié par le domaine de sécurité afin de constater si le logiciel de commande est corrompu et le logiciel de commande pouvant de préférence être vérifié par une carte à puce qui est disposée dans un coffre-fort.

14. Distributeur automatique selon l'une ou plusieurs des revendications de distributeur automatique précédentes, **caractérisé par** un dispositif qui est configuré de telle sorte que le clavier, en cas de panne du réseau électrique, se place dans un mode qui n'autorise pas de saisie en texte clair.
